Europäisches Patentamt

European Patent Office

Office européen des brevets

(11) Publication number: **0 218 417**
**B1**

(12) **EUROPEAN PATENT SPECIFICATION**

(45) Date of publication of patent specification: **11.04.90**

(21) Application number: **86307365.6**

(22) Date of filing: **25.09.86**

(51) Int. Cl.⁵: **F 28 F 25/08, B 01 D 53/18**

(54) **Structured "WV" packing elements.**

(30) Priority: **27.09.85 US 781249**

(43) Date of publication of application:
**15.04.87 Bulletin 87/16**

(45) Publication of the grant of the patent:
**11.04.90 Bulletin 90/15**

(84) Designated Contracting States:
**AT BE CH DE FR GB IT LI LU NL SE**

(56) References cited:
**EP-A-0 033 413**
**EP-A-0 130 745**
**DE-A-1 519 550**
**DE-A-2 118 887**
**FR-A- 771 047**
**FR-A-1 571 879**
**FR-A-2 086 365**
**FR-A-2 390 201**
**FR-E- 85 296**
**US-A-3 378 239**

(73) Proprietor: **JAEGER PRODUCTS,**
**INCORPORATED**
**P.O. Box 1563**
**Spring Texas 77383 (US)**

(72) Inventor: **Seah, Alex M.**
**5800 Leedale, No. 22**
**Houston, Texas 77016 (US)**

(74) Representative: **Rushton, Ronald et al**
**SOMMERVILLE & RUSHTON 11 Holywell Hill**
**St. Albans Hertfordshire AL1 1EZ (GB)**

Courier Press, Leamington Spa, England.

## Description

Background of the invention
Field of the invention

The present invention relates to a packing element for an exchange column, either mass transfer or heat exchange, and more particularly to such multiple-member packing elements as consisting of a plurality of adjacent, parallel, corrugated plates, with the corrugations of adjacent plates abutting one another forming fluid-receiving channels therethrough.

Description of the prior art

Many commercial chemical processes rely on the mass and heat transfer advantages provided by packed columns. Such processes can include distillation, absorption and desorption, gas cleaning and drying, and various biological processes, particularly forms of filtration. In the majority of cases, two fluids, normally a gas and a liquid, are intermingled within a column, typically as countercurrent flow streams. The reaction rates for these chemical processes are directly proportional to the amount of effective surface area within the column or tower over which the two fluids can reactively interface with one another. Packing elements are placed in the towers to increase the amount of surface area available for such interfacing, and one type of packing element that has been used consists of a multi-layered construction of parallel, corrugated plates.

The plates are generally made of sheet metal and are placed in contact with one another such that the folds or corrugations are at an angle to the column or tower axis. The plates themselves are disposed in planes that are parallel to the tower axis, thus maximizing the flow rates of the two fluids through the corrugated plates. When placed in such an attitude, and because the individual plates are formed out of sheet metal, problems have been experienced in obtaining a uniform distribution of the liquid over the surface of the plate. This can be a severe disadvantage since uniform distribution is essential for an effective mass transfer or heat exchange process when utilizing a gas as one of the fluids.

A further disadvantage with the corrugated-plate packing elements has been the tendency of the liquid fluid to flow down the folds or corrugations instead of evenly coating the plate surface while flowing from fold to fold. This "channelling" significantly decreases the reactive surface area available to the other fluid, and simultaneously increases the rate of flow-through of the liquid. These two events have almost a synergistic effect with one another, magnifying the decrease in the amount of reactant products and product yield for the packed tower.

The structure taught by Bredberg, Patent US—A—3,262,682, responds to these problems by providing liquid-absorbing, corrugated sheets in the packing element. The sheets are, to some extent, self-wetting upon the application of the liquid-phase material. In addition, the liquid-absorbing sheet also tends to reduce the run-off problems. Both of these same disadvantages of corrugated plate elements are also addressed in Meier, Patent US—A—4,296,050, by providing fine grooves and random apertures in the folded surfaces. The capillary action generated by the fine grooves (termed "fluting" in Meier) assists in the wetting of the element surfaces. The random holes also provide such a wetting effect by forcing the liquid to move in a lateral direction around the hole, in effect acting like an obstruction to the liquid stream.

In the European patent application EP—A—130 745 to Chen et al., there is disclosed a packing element comprising contact plates disposed in face-to-face contact with respective corrugations inclined to the horizontal across a notional plane. A perforated lamella is disposed across the notional plane in a preferred embodiment of the Chen patent.

In another embodiment of the Chen patent, the contact plates comprise a triangular tabbed aperture. Fluid flow in a direction perpendicular to the base of the triangular aperture is received within the triangular tabbed aperture, while flow in a direction parallel to the base of the aperture may be partially diverted and partially received within the aperture.

Several other embodiments of the aperture and/or tabbed construction are shown in the Chen patent. However, the central teaching to the Chen patent relates to the utilization of the intermediate lamella which is sandwiched between the corrugated plates. The function of the sandwiched lamella is described in the Chen patent as affording patterns of vapor and liquid passages through the sandwiched lamella and adjacent corrugation ridges.

In accordance with the Chen patent, the apertures can be replaced with bumps or detents. The structure taught by the Chen patent therefore partially responds to the aforementioned problems by providing corrugated sheets wet by the sandwiched lamella. However, the Chen device is not so advantageous for a packing element because the distribution of fluid over the contact plates is not satisfactorily uniform.

There is, therefore, a need for a packing element comprising contact sheets for mass transfer or heat exchange in an exchange column.

Summary of the invention

According to a first aspect of the present invention, there is disclosed a packing element comprising at least a first corrugated plate and a second corrugated plate adjacent to and parallel with one another and each comprising a plurality of surface portions and alternate troughs and ridges, with each said surface portion being defined between a said trough and the next adjacent ridge, said troughs of said first corrugated plate abutting said ridges of said second corrugated plate, each said corrugated plate having a plurality of first notches, each of which comprises a substantially V-shaped opening formed in the corrugated plate and at least a first element in the form of a single prong, adjacent to and in fluid communication with said substantially V-shaped opening. The packing element of the present invention is characterized in that each of said first and second corrugated plates also has a plurality of second notches, each of which comprises a substantially W-shaped opening formed in the corrugated plate and a pair of prongs projecting outwardly from the surface of the plate in a first direction, and defining drip points said pair of prongs being adjacent to and in fluid communication with said substantially W-shaped opening, said second notches being arranged alternately with said first notches in a pattern across the surface portions of each corrugated plate, so as to provide a liquid flow-path on said corrugated plates whereby said first and second notches permit fluid communication between said first and second corrugated plates of said packing element when placed within said exchange column.

Preferably, the first notches and the second notches each form separate, respective linear arrays on each said surface portion between a ridge and a trough.

Typically, each linear array of second notches is upstream of the linear array of first notches on each said surface portion.

Each second notch may comprise a second element between the prongs of said pair. The second element is preferably a single prong integral with the surface of the corrugated plate, or may comprise a further pair of prongs integral with the surface of the corrugated plates.

Typically, the second member projects outwardly from each surface of the corrugated plate. Each second element may project outwardly from the associated said surface portion in a second direction substantially opposite the first direction.

According to the present invention in another aspect, there is disclosed a method of manufacturing a packing element for use in an exchange column, comprising the steps of providing a plurality of plates, forming notches in the plates, the forming step comprising the step of providing a plurality of first notches comprising a substantially V-shaped opening and an element in the form of a single prong, adjacent to and in fluid communication with the substantially V-shaped opening, folding the plates so as to form a plurality of corrugated plates having a plurality of troughs and ridges with a surface portion defined between a said trough and the next adjacent ridge, and positioning the corrugated plates so that the troughs of a first corrugated plate abut the ridges of an adjacent second corrugated plate, the corrugated plates being further placed adjacent to and parallel with one another. This method is characterized in that the step of forming notches in each plate further comprises the step of providing a plurality of second notches, each second notch comprising a substantially W-shaped opening and a pair of prongs projecting outwardly from the surface of the plate in a first direction, whereby the pair of prongs define drip points the pair of prongs being adjacent to and in fluid communication with the substantially W-shaped opening, the notch forming step further comprising the step of forming the second notches alternately with the first notches in a pattern across a plurality of surface portions of the plate between respective fold lines thereof, so as to provide a liquid flow-path on the corrugated plates.

Preferably, the first and second notches are formed by stamping. There is also disclosed the use of a packing element according to the invention in an exchange column.

Brief description of the drawings

Figure 1 is a perspective view, with portions in phantom, showing a packing element according to the present invention;

Figure 2 is a partial perspective view showing that portion of the packing element substantially within the circle—2—in Figure 1;

Figure 3 is a partial top plan view of a single packing element layer according to the present invention, with broken lines indicating the corrugation or fold lines for this layer and for the layer located immediately adjacent, either below or above (not shown);

Figure 4 is a partial perspective view of a single packing element layer, similar to that shown in plan view, in Figure 3;

Figure 5 is a side elevational view, in section, showing the "W" notch or gill opening according to the present invention;

Figure 6 is a partial perspective view showing a single packing element layer, similar to that shown in Figures 3 and 4, as a corrugated or folded construction according to the present invention;

Figure 7 is a partial perspective view, similar to Figure 6, showing an alternate notch or gill construction according to the present invention; and

Figure 8 is a partial top plan view showing a "W" notch of a modified shape formed on a single packing element layer prior to bending the punched-out sections, comprising two curved prongs, from the plane containing the packing layer, in order to complete the "W" notch according to the present invention.

Description of the preferred embodiment

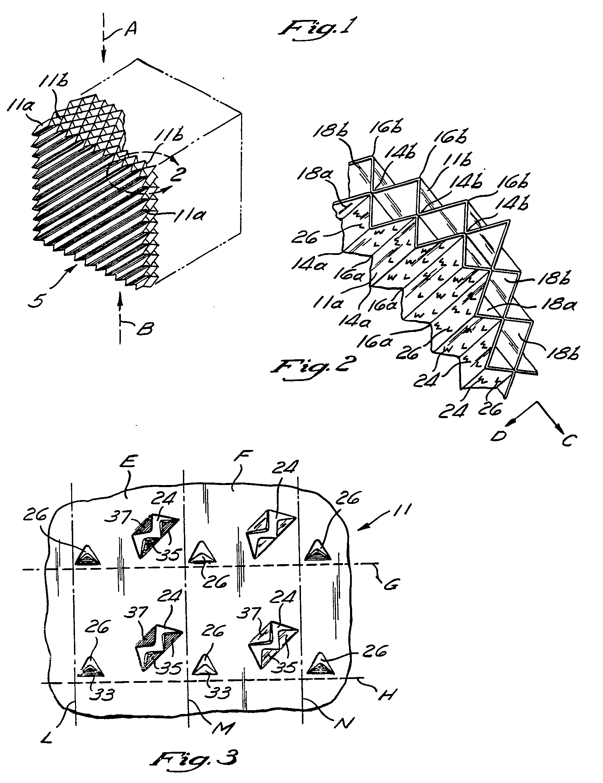

Figure 1 shows a packing element 5 of the type used in a variety of chemical processes involving two or more fluid flow-streams, with the interaction between the fluids most frequently in cross- or counter-flow. The packing element 5 is constructed from a plurality of individual corrugated plates 11, with the individual unit or cell pattern of the packing element 5 created by a pair of the corrugated plates 11, identified in Figure 1 by reference numerals 11a and 11b. This pair of corrugated plates 11a, 11b has been identified merely for purposes of explaining the structure and operating principles of the packing element 5, and there is no particular difference between any of the corrugatd plate-pairs formed by the plurality of corrugated plates 11 that make up the packing element 5.

As shown in Figure 1, the packing element 5 is a block-like construction, and this shape is, of course, entirely a matter of design choice. The packing element 5 is formed from a number of corrugated plates 11 of a preselected geometric shape, and is designed to be placed in a column or a tower (neither shown) in a manner permitting the cooperation between adjacent blocks or shaped constructions of packing elements 5 to ensure an unrestricted passage of a fluid A in the direction shown by the arrows in Figure 1 and the passage of fluid B in the direction of the arrows adjacent to reference letter B in Figure 1. Both sets of arrows in Figure 1 indicate a counter-current flow relationship between the fluids A and B. This relationship is only by way of example and not by way of limitation. Within the packing element 5, the construction of the passageways for the two fluids A, B are best shown in Figure 2.

The corrugated or folded plates 11 sequentially provide a plurality of troughs 14 and a plurality of ridges 16, with a surface portion of the plate 11 separating each trough 14 and the next adjacent ridge 16. When the pair of corrugated plates 11a, 11b are in juxtaposition, as shown in Figure 2, the ridges 16a of the first corrugatd plate, 11a, abut the troughs 14b of a second corrugated plate, 11b. As shown in Figure 2, the second corrugated plate 11b has been rotated 90° from a superimposed position over the first corrugated plate 11a. The precise amount of rotation also does not constitute the present invention, but is preferably near 90°. Within this spatial relationship, the troughs 14b and the ridges 16b of the second corrugated plate 11b are aligned with a first axis C shown in Figure 2 and the troughs 14a and ridges 16a of the first corrugated plate 11a are aligned with a second axis D. The first and second axes C, D are perpendicular to one another in Figure 2, indicating a 90° rotation of the corrugated plates 11a, 11b.

The alternating sequence of the troughs 14 and the ridges 16 as between any pair of adjacent corrugated plates 11a, 11b forms a series of passageways 18a, 18b suitable for receiving and directing the flow of fluids through the packing element 5. Although there is no structural barrier between the adjacent pair of corrugated plates 11a, 11b, the 90° rotation between the adjacent corrugated plates 11a, 11b substantially isolates the flow-streams in the respective passageways 18a, 18b. This is of course a desirable feature, since thereby the surfaces of both of the corrugated plates 11a, 11b are fully utilized in the mass transfer and/or heat exchange process.

Although not shown in Figure 2 for the sake of clarity, all of the corrugated plates 11 of the packing element 5 are provided with two different types of notches, a W-notch 24 and a V-notch 26, in the surface thereof. The W-notches 24 and the V-notches 26 are formed in specific locations on the corrugated plates 11 with respect to the positions of the troughs 14 and the ridges 16. For each portion of the corrugated plate 11 separating the troughs 14 and the ridges 16, the W-notches 24 will form a linear, parallel array adjacent to the troughs 14 and the ridges 16. A similar linear array is formed by the V-notches 26 formed adjacent to the W-notches 26 but separated therefrom by the troughs 14 or the ridges 16. The arrays of W-notches 24 and the V-notches 26 thus alternate across the surface of the corrugated plates 11 in a regularly spaced manner. The location of this entire pattern is determined by the operating orientation of the packing element 5. To ensure proper operation of the packing element 5, it is necessary that with respect to each surface portion of the corrugated plates 11 between a trough 14 an a ridge 16, the W-notches 24 lie upstream of the V-notches 26, whereby upon introducing a liquid fluid (such as A in Figure 1), the fluid will flow from the W-notch 24 towards the V-notch 26. As will be described later, this arrangement is required in order to obtain the desired liquid flow-path on the corrugated plates 11.

As shown in Figure 3, the W-notches 24 and the V-notches 26 alternate in a regular array across the surface of the corrugated plates 11, with their respective positions fixed about a sequence of three fold lines L, M, N. The corrugated plates 11 are most preferably manufactured from sheet metal and the W- and V-notches are constructed by a stamping operation wherein either a V- or W-shaped cut is made in the sheet metal forming either a single prong 33 or a pair of prongs 35, respectively. The prongs 33, 35 are subsequently bent out of the plane containing the corrugated plate 11, the direction of bending being dependent upon achieving the desired liquid flow-path in the completed construction. The zig-zag pattern of the corrugated plate 11 causes the bending direction of the prongs 33, 35 to form an alternating pattern across the surface of the corrugated plates 11. For example, in the section of the corrugated plate 11 shown in Figure 3, a first segment E of the corrugated plate 11 formed between the first fold line L and the second fold line M have the prongs 33, 35 bent out of the surface of the plane containing the corrugated plate 11. In contrast, a second segment F of the corrugated plate 11, formed between the second fold line M and the third fold line N, has the prongs 33, 35 bent inwardly from the plane containing the corrugated plate 11. This pattern continues throughout the corrugated plate 11 and is necessary to obtain the proper liquid flow-path through the packing element 5.

In the fabrication of the W-notch 24, a center prong 37 is formed between the two prongs 35.

The center prong may remain in the plane of the corrugated plates 11. However, as shown in Figure 3 and 4, the center prong 37 may also be displaced out of the plane of the corrugated plate 11, in an opposite direction from that of the two prongs 35. The displacement of the center prong 37 is typically a result of the manufacturing process for bending the two prongs 35 and no significant additional advantage is believed obtained by the bending of the center prong 37. The respective bending between the center prong 37 and the prongs 35 is also shown in Figure 5.

Folding of the corrugated plate 11 about the three fold lines L, M, N produces the corrugated plate 11 in its operational form as shown in Figure 6. The folded or corrugated surface of the corrugated plate 11 in effect creates a series of individual surfaces separated by the troughs and ridges, and in Figure 6, these are noted by a first flow surface 42, a second flow surface 44, a third flow surface 46 and a fourth flow surface 48. Moreover, the corrugated plate 11 according to the present invention provides both an inner and an outer flow surface, which will be indicated on Figure 6 by reference letters "a" and "b". The path of a liquid flow stream R is shown in Figure 6 first impacting upon the first flow surface 42a, flowing through a first V-notch 26', being directed by the prong or fluid directional member 33, thereafter falling upon the inner, second flow surface 44b. The flow-stream R continues flowing along the second inner surface 44b until reaching a first W-notch 24'. A portion of the liquid flow stream R flows down the two prongs 35, each of which forms a drip point at its tip with the flow-stream R dropping from the ends of the prongs 35, falling onto a third flow surface 46a, there below. The flow-stream R continues by flowing through a second V-notch 26", falling to an underlying inner fourth flow surface 48b, with a portion thereafter flowing through a second W-notch 24", and then dropping from its prongs 35 onto yet another surface of the corrugated plate 11, not shown. Although not shown in Figure 6 for the sake of clarity, a second liquid flow-stream is formed using primarily the inner flow surfaces 44b, 46a, 48b and making use of an analogous grouping of related W- and V-notches 24, 26.

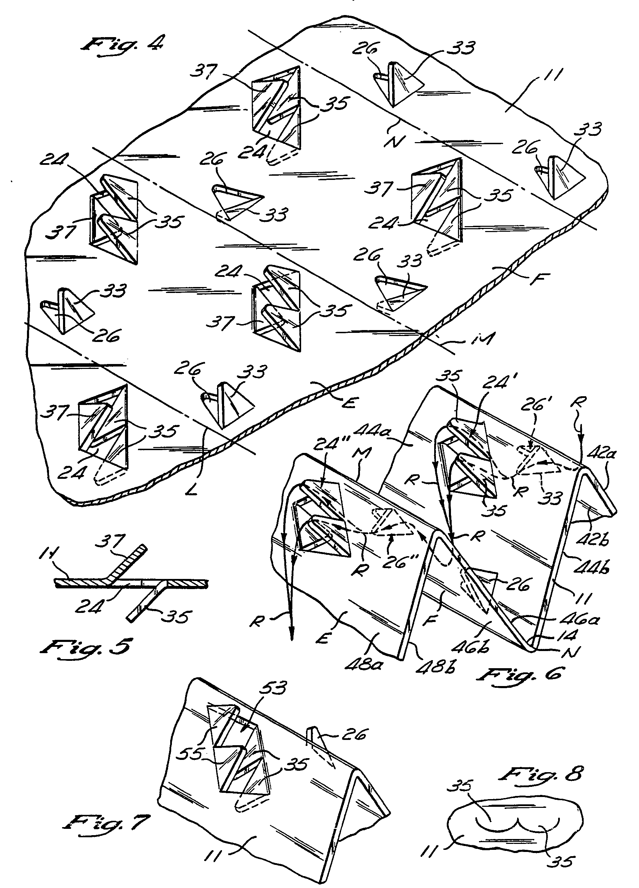

The combination of both liquid flow streams maximizes the wetted surface area for the corrugated plate 11. Passages for the second fluid, not shown, typically a gas such as air, are formed primarily by the troughs 14, although some gas advantageously passes through both the W- and V-notches 24, 26. In addition, since a liquid flow stream is simultaneously passing through the W- and the V-notches 24, 26, the passage of the second fluid therethrough creates additioanl opportunities for intermixing. In order to provide larger passageways for the intermixing of the two fluid streams, it is possible to form a compound W-notch 53, shown in Figure 7, having a second pair of prongs 55 bent in an opposite manner from the first pair of prongs 35. This manner of construction increases the amount of air flow through the compound W-notch 53 from that of the previous construction, increasing the intermixing of the two fluid streams.

## Claims

1. A packing element (5) comprising at least a first corrugated plate (11a) and a second corrugated plate (11b) adjacent to and parallel with one another and each comprising a plurality of surface portions and alternate troughs (14) and ridges (16), with each said surface portion being defined between a said trough (14) and the next adjacent ridge (16), said troughs (14a) of said first corrugated plate (11a) abutting said ridges (16b) of said second corrugated plate (11b) each said corrugated plate (11a, 11b) having a plurality of first notches (26), each of which comprises a substantially V-shaped opening formed in the corrugated plate and at least a first element (33) in the form of a single prong, adjacent to and in fluid communication with said substantially V-shaped opening, characterized in that each of said first and second corrugated plates (11a, 11b) also has a plurality of second notches (24), each of which comprises a substantially W-shaped opening formed in the corrugated plate and a pair of prongs (35) projecting outwardly from the surface of the plate (11a, 11b) in a first direction, and defining drip points, said pair of prongs (35) being adjacent to and in fluid communication with said substantially W-shaped opening, said second notches (24) being arranged alternately with said first notches (26) in a pattern across the surface portions of each corrugated plate (11a, 11b) so as to provide a liquid flow path on said corrugated plates (11a, 11b) whereby said first and second notches (24, 26) permit fluid communication between said first and second corrugated plates (11a, 11b) of said packing element (5) when placed within said exchange column.

2. A packing element as defined in Claim 1, wherein said first notches (26) and said second notches (24) form separate, respective, linear arrays on each said surface portion between a ridge (16) and a trough (14).

3. A packing element as defined in Claim 2, wherein each said linear array of second notches (24) is upstream of the said linear array of first notches (26) on each said surface portion.

4. A packing element as defined in any one of the preceding claims, wherein each prong (35) of a said pair in a said second notch (24) has a tip defining a said drip point.

5. A packing element as defined in any one of Claims 1 to 4, wherein each said second notch (24) further comprises a second element (37, 55) between the prongs (35) of said pairs.

6. A packing element as defined in Claim 5, wherein each said second element comprises a single prong (37) integral with the surface of the corrugated plate (11a, 11b).

7. A packing element as defined in Claim 5, wherein each said second element comprises a further pair of prongs (55) integral with the surface of the corrugated plate (11a, 11b).

8. A packing element as defined in Claim 6 or Claim 7, wherein each said second element (37, 55) projects outwardly from the associated said surface portion in a second direction substantially opposite to said first direction.

9. A method of manufacturing a packing element (5) for use in an exchange column, comprising the steps of:

(a) providing a plurality of plates (11);

(b) forming notches in said plates, said forming step comprising the steps of providing a plurality of first notches (26) comprising a substantially V-shaped opening and an element (33) in the form of a single prong, adjacent to and in fluid communication with said substantially V-shaped opening;

(c) folding said plates (11) so as to form a plurality of corrugated plates (11a, 11b) having a plurality of troughs (14) and ridges (16) with a surface portion defined between a said trough (14) and the next adjacent ridge (16);

(d) positioning said corrugated plates (11) so that said troughs (14) of a first corrugated plate (11a) abut the ridges (16) of an adjacent second corrugated plate (11b), said corrugated plates (11) being further placed adjacent to and parallel with one another; characterized in that

the step of forming notches in each plate (11) further comprises the step of providing a plurality of second notches (24), each said second notch (24) comprising a substantially W-shaped opening and a pair of prongs (35) projecting outwardly from the surface of the plate (11) in a first direction, whereby said pair of prongs (35) define drip points, said pair of prongs being adjacent to and in fluid communication with said substantially W-shaped opening, said notch forming step further comprising the step of forming the second notches (24) alternately with the first notches (26) in a pattern across a plurality of said surface portions of the plate (11) between respective fold lines (M, L) thereof, so as to provide a liquid flow-path on the corrugated plates (11a, 11b).

10. A method of manufacturing a packing element as defined in Claim 9, wherein said plurality of first and second notches are formed by stamping.

11. The use of a packing element as defined in any one of the preceding Claims in an exchange column.

## Patentansprüche

1. Füllkörperelement (5) mit wenigstens einer ersten geriffelten bzw. gewellten Platte (11a) und einer zweiten geriffelten bzw. gewellten Platte (11b), die benachbart und parallel zueinander angeordnet sind und jeweils eine Vielzahl von Oberflächenabschnitten und abwechselnde Täler (14) und Kämme (16) aufweisen, wobei jeder Oberflächenabschnitt zwischen einem der Tröge (14) und dem nächsten benachbarten Kamm (16) begrenzt ist, wobei ferner Tröge (14a) der ersten gewellten Platte (11a) an Kämmen (16b) der zweiten gewellten Platte (11b) anliegen und jede gewellte Platte (11a, 11b) eine Vielzahl von ersten Ausschnitten (26) besitzt, von denen jeder eine im wesentlichen V-förmige Öffnung aufweist, die in der gewellten Platte geformt ist, sowie wenigstens ein erstes Element (33) in Form einer einzigen Zacke, und zwar benachbart zu und in Fluidverbindung mit der im wesentlichen V-förmigen Öffnung, dadurch gekennzeichnet, daß jede der ersten und zweiten gewellten Platten (11a, 11b) auch eine Vielzahl von zweiten Ausschnitten (24) besitzt, von denen jeder eine im wesentlichen W-förmige Öffnung umfaßt, die in der gewellten Platte geformt ist, sowie ein Paar von Zacken (35), die auswärts von der Oberfläche der Platte (11a, 11b) in einer ersten Richtung ragen und Tropfpunkte definieren, daß das Paar von Zacken (35) benachbart zu und in Fluidverbindung mit der im wesentlichen W-förmigen Öffnung steht, daß die zweiten Aussparungen (24) abwechselnd mit den ersten Aussparungen (26) in einem Muster über die Oberflächenabschnitte jeder gewellten Platte (11a, 11b) hinweg angeordnet sind, so daß auf den gewellten Platten (11a, 11b) ein Fluidströmungspfad gebildet wird, wodurch die ersten und zweiten Aussparungen (24, 26) eine Fluidverbindung zwischen den ersten und zweiten gewellten Platten (11a, 11b) des Füllkörperelements (5) gestatten, wenn dieses in der Austauschersäule angeordnet ist.

2. Füllkörperelement nach Anspruch 1, bei dem die ersten Aussparungen (26) und die zweiten Aussparungen (24) jeweilige separate, lineare Anordnungen auf jedem der Oberflächenabschnitte zwischen einem Kamm (16) und einem Tal (14) bilden.

3. Füllkörperelement nach Anspruch 2, bei dem jede lineare Anordnung von zweiten Aussparungen (24) stromaufwärts der linearen Anordnung von ersten Aussparungen (26) auf jedem Oberflächenabschnitt angeordnet ist.

4. Füllkörperelement nach einem der vorhergehenden Ansprüche, bei dem jede Zacke (35) des Paars einer der zweiten Aussparungen (24) eine Spitze besitzt, welche den Tropfpunkt bildet.

5. Füllkörperelement nach einem der Ansprüche 1 bis 4, bei dem jede zweite Aussparung (24) ferner ein zweites Element (37, 55) zwischen den Zacken (35) des Paars umfaßt.

6. Füllkörperelement nach Anspruch 5, bei dem jedes der zweiten Elemente eine einzelne Zacke (37) umfaßt, die einstückig mit der Oberfläche der gewellten Platte (11a, 11b) ausgebildet ist.

7. Füllkörperelement nach Anspruch 5, bei dem jedes der zweiten Elemente ein weiteres Paar von Zacken (55) aufweist, die einstückig mit der Oberfläche der gewellten Platte (11a, 11b) ausgebildet sind.

8. Füllkörperelement nach Anspruch 6 oder 7, bei dem jedes zweite Element (37, 55) auswärts von dem zugeordneten Oberflächenabschnitt in einer zweiten Richtung ragt, die im wesentlichen entgegengesetzt zur ersten Richtung verläuft.

9. Verfahren zur Herstellung eines Füllkörperelements (5) zur Verwendung in einer Austauschersäule, mit den folgenden Verfahrensschritten:

(a) Vorsehen einer Vielzahl von Platten (11);

(b) Formen von Aussparungen in den Platten, wobei der Formungsschritt den Verfahrensschritt umfaßt, daß eine Vielzahl von ersten Aussparungen (26) gebildet wird, welche eine im wesentlichen V-förmige Öffnung umfassen und ein Element (33) in der Form einer einzelnen Zacke in der Nähe und in Fluidverbindung mit der im wesentlichen V-förmigen Öffnung;

(c) Falten der Platten (11), so daß eine Vielzahl von gewellten Platten (11a, 11b) gebildet wird, welche eine Vielzahl von Tälern (14) und Kämmen (16) besitzen, wobei zwischen einem Tal (14) und dem nächsten benachbarten Kamm (16) ein Oberflächenabschnitt begrenzt ist;

(d) Positionieren der gewellten Platten (11) derart, daß die Täler (14) einer ersten gewellten Platte (11a) an den Kämmen (16) einer benachbarten zweiten gewellten Platte (11b) anliegen, wobei die gewellten Platten (11) ferner benachbart und parallel zueinander angeordnet sind; dadurch gekennzeichnet,

daß der Verfahrensschritt der Formung von Aussparungen in jeder Platte (11) ferner den Schritt umfaßt, daß eine Vielzahl von zweiten Aussparungen (24) geformt wird, daß jede zweite Aussparung (24) eine im wesentlichen W-förmige Öffnung und ein Paar von Zacken (35) umfaßt, die auswärts von der Oberfläche der Platte (11) in einer ersten Richtung ragen, wodurch das Paar von Zacken (35) Tropfpunkte bildet und das Paar von Zacken in der Nähe zu und in Fluidverbindung mit der im wesentlichen W-förmigen Öffnung angeordnet ist, daß der Aussparungsformungsschritt ferner den Schritt umfaßt, daß die zweiten Aussparungen (24) abwechselnd mit den ersten Aussparungen (26) in einem Muster über eine Vielzahl der Oberflächenabschnitte der Platte (11) zwischen deren jeweiligen Faltlinien (M, L) gebildet werden, so daß ein Flüssigkeitsströmungspfad auf den gewellten Platten (11a, 11b) gebildet wird.

10. Verfahren zur Herstellung eines Füllkörperelements nach Anspruch 9, bei dem die Vielzahl der ersten und zweiten Aussparungen durch Stanzen geformt werden.

11. Verwendung eines Füllkörperelements nach einem der vorhergehenden Ansprüche in einer Austauschersäule.

**Revendications**

1. Elément de garnissage (5) qui comprend au moins une première plaque ondulée (11a) et une seconde plaque ondulée (11b) adjacentes et parallèles l'une à l'autre et comprenant chacune plusieurs parties de surface et des creux (14) et des arêtes (16) qui alternent, chacune desdites parties de surface étant définie entre un creux (14) et l'arête immédiatement adjacente (16), lesdits creux (14a) de ladite première plaque ondulée (11a) butant contre lesdites arêtes (16b) de ladite seconde plaque ondulée (11b), chacune desdites plaques ondulées (11a, 11b) présentant plusieurs premières encoches (26) qui comprennent chacune une ouverture de forme sensiblement en V réalisée dans la plaque ondulée et au moins un premier élément (33) sous la forme d'une dent simple, adjacent à ladite ouverture de forme sensiblement en V et en communication de fluide avec elle, caractérisé en ce que chacune desdites première et seconde plaques ondulées (11a, 11b) présente également plusieurs secondes encoches (24) qui comprennent chacune une ouverture de forme sensiblement en W réalisée dans la plaque ondulée et une paire de dents (35) faisant saillie vers l'extérieur de la surface de la plaque (11a, 11b) dans une première direction, et définissant des points d'égouttage, ladite paire de dents (35) étant adjacente à ladite ouverture de forme sensiblement en W et en communication de fluide avec elle, lesdites secondes encoches (24) étant agencées en alternance avec lesdites premières encoches (26) suivant une configuration sur les parties de surface de chaque plaque ondulée (11a, 11b) afin d'établir un trajet d'écoulement de liquide sur lesdites plaques ondulées (11a, 11b) de manière que lesdites premières et secondes encoches (24, 26) permettent une communication du fluide entre lesdites première et seconde plaques ondulées (11a, 11b) dudit élément de garnissage (5) lorsqu'il est placé dans ladite colonne d'échange.

2. Elément de garnissage selon la revendication 1, dans lequel lesdites premières encoches (26) et lesdites secondes encoches (24) forment des rangées linéaires respectives séparées sur chacune desdites parties de surface entre une arête (16) et un creux (14).

3. Elément de garnissage selon la revendication 2, dans lequel chacune desdites rangées linéaires de secondes encoches (24) est en amont de ladite rangée linéaire de premières encoches (26) sur chacune desdites parties de surface.

4. Elément de garnissage selon l'une quelconque des revendications précédentes, dans lequel chaque dent (35) d'une paire dans une seconde encoche (24) comporte une pointe définissant ledit point d'égouttage.

5. Elément de garnissage selon l'une quelconque des revendications 1 à 4, dans lequel chacune desdites secondes encoches (24) comprend en outre un second élément (37, 55) entre les dents (35) desdites paires.

6. Elément de garnissage selon la revendication 5, dans lequel chacun desdits seconds éléments comprend une seule dent (37) réalisée d'une seule pièce avec la surface de la plaque ondulée (11a, 11b).

7. Elément de garnissage selon la revendication 5, dans lequel chacun desdits seconds éléments comprend une autre paire de dents (55) réalisée d'une pièce avec la surface de la plaque ondulée (11a, 11b).

8. Elément de garnissage selon la revendication 6 ou la revendication 7, dans lequel chacun desdits seconds éléments (37, 35) fait saillie vers l'extérieur de ladite partie de surface associée dans une seconde direction sensiblement opposée à ladite première direction.

9. Procédé de fabrication d'un élément de garnissage (5) à utiliser dans une colonne d'échange, comprenant les étapes qui consistent:

(a) à utiliser plusieurs plaques (11);

(b) à former des encoches dans lesdites plaques, ladite étape de formation comprenant l'étape qui consiste à réaliser plusieurs premières encoches (26) comprenant une ouverture de forme sensiblement en V et un élément (33) sous la forme d'une dent unique, adjacent à ladite ouverture de forme sensiblement en V et en communication de fluide avec elle;

(c) à plier lesdites plaques (11) de manière à former plusieurs plaques ondulées (11a, 11b) présentant plusieurs creux (14) et arêtes (16), une partie de surface étant définie entre un creux (14) et l'arête immédiatement adjacente (16);

(d) à positionner les plaques ondulées (11) de manière que lesdits creux (14) d'une première plaque ondulée (11a) soient en butée avec les arêtes (16) d'une seconde plaque ondulée adjacente (11b), lesdites plaques ondulées (11) étant en outre placées de façon à être adjacentes et parallèles l'une à l'autre; caractérisé en ce que l'étape de formation d'encoches dans chaque plaque (11) comprend en outre l'étape consistant à réaliser plusieurs secondes encoches (24), chacune desdites secondes encoches (24) comprenant une ouverture de forme sensiblement en W et une paire de dents (35) faisant saillie vers l'extérieur de la surface de la plaque (11) dans une première direction, de manière que ladite paire de dents (35) définisse des points d'égouttage, ladite paire de dents étant adjacente à ladite ouverture de forme sensiblement en W et en communication de fluide avec elle, ladite étape de formation d'encoches comprenant en outre l'étape consistant à former les secondes encoches (24) afin qu'elles alternent avec les premières encoches (26) suivant une configuration s'étendant sur plusieurs desdites parties de surface de la plaque (11) entre des lignes de pliage respectives (M, L) de celle-ci, afin de former un trajet d'écoulement de liquide sur les plaques ondulées (11a, 11b).

10. Procédé de fabrication d'un élément de garnissage selon la revendication 9, dans lequel lesdites premières et secondes encoches sont formées par estampage.

11. Utilisation d'un élément de garnissage selon l'une quelconque des revendications précédentes dans une colonne d'échange.

Fig.1

Fig.2

Fig.3

Fig. 4

Fig. 5

Fig. 6

Fig. 7

Fig. 8